# EUROPÄISCHE PATENTANMELDUNG

(11) **EP 1 650 529 A1**
(43) Veröffentlichungstag der Anmeldung: **26.04.2006**
(21) Anmeldenummer: 04024827.0
(22) Anmeldetag: 19.10.2004
(51) Int. Cl.: G01B 11/245, A61C 13/00

(54) **Anordnung und Verfahren zum Abtasten mehrerer Objekte**

(71) Anmelder: Diener AG Precision Machining, 8424 Embrach (CH)
(72) Erfinder: Diefenbacher, Rolf, 8193 Eglisau (CH)
(74) Vertreter: Müller, Christoph Emanuel

(57) **Zusammenfassung**

Die Erfindung betrifft eine Anordnung (z.B. auf Basis von Triangulation) zum Abtasten von Objekten (1.1,1.2) mit einem gebündelten Lichtstrahl, wobei der Lichtstrahl relativ zur Oberfläche des Objekts (1.1,1.2) bewegt wird. Die Anordnung weist wenigstens zwei Objekthalterungen und Mittel zum Erzeugen von wenigstens einem Lichtstrahl pro Objekt (1.1,1.2) sowie jeweils einem Lichtstrahl zugeordnete Lichtempfänger auf. Mit der erfindungsgemässen Anordnung können wenigstens zwei Objekte (1.1,1.2) zur gleichen Zeit abgetastet werden. Dabei werden mindestens zwei Messköpfe verwendet, die über ein gemeinsames Spiegelsystem die Objekte beleuchten und die Oberfläche der Objekte abtasten.

## Beschreibung

Die vorliegende Erfindung betrifft eine Abtastanordnung und ein Verfahren zum gleichzeitigen Abtasten von mehreren Objekten gemäss dem Oberbegriff der unabhängigen Ansprüche.

Es ist bekannt, dreidimensionale Objekte mit Licht abzutasten, um eine digitale Darstellung des Objektes zu erzeugen. Dazu geeignete Anordnungen sind beispielsweise aus DE 33 15 576, DE 42 08 455 oder EP 671 679 bekannt.

Bei Abtastanordnungen gemäss den oben erwähnten Dokumenten wird ein Lichtstrahl über die Oberfläche eines Messobjektes gelenkt. Das Objekt kann dabei stillstehen, rotieren oder geschwenkt werden. Der Lichtstrahl kann mit beweglich angeordneten Lichtquellen oder mit schwenkbaren Spiegeln oder Kombinationen davon ausgelenkt werden. Die Datenaufnahme erfolgt üblicherweise mit ortsauflösenden CCD-Arrays, mit welchen eine Triangulation möglich ist.

All diesen Geräten ist gemeinsam, dass nur ein Objekt zu einer Zeit abgetastet werden kann. Das Abtasten ist daher verhältnismässig langsam. Aufgabe der vorliegenden Erfindung ist es, die Nachteile des Bekannten zu vermeiden, insbesondere also eine Anordnung und ein Verfahren zu schaffen, mit welchen ein schnelleres Abtasten bei gleicher Abtastgenauigkeit möglicht ist. Dabei ist es insbesondere Aufgabe der Erfindung, dass die Anordnung kompakt ist und sich in den Massen nicht wesentlich von einer bekannten Messanordnung unterscheidet.

Diese Aufgabe wird mit einer Abtastanordnung und mit einem Verfahren gemäss dem kennzeichnenden Teil der unabhängigen Ansprüche gelöst.

Die Abtastanordnung zum Abtasten von Objekten mit einem gebündelten Lichtstrahl weist wenigstens zwei Objektalterungen. Der Lichtstrahl wird wie in herkömmlichen relativ zur Oberfläche des Objekts bewegt. Es ist ausserdem irrelevant, ob der Lichtstrahl durch die Lichtquelle selbst gebündelt wird, wie das bei einem Laser der Fall sein kann, oder ob eine Fokussieranordnung den Lichtstrahl bündelt. Die Objekthalterungen sind zur Aufnahme von je mindestens einem Objekt ausgebildet.

Weiter sind Mittel zum Erzeugen von mindesetens einem Lichtstrahl pro Objekt vorgesehen. Zum Erzeugen von mehreren Lichtstrahlen können mehrere Lichtquellen verwendet werden. Es kann auch ein Strahlteiler eingesetzt werden, mit welchem ein Strahl in eine vorbestimmte Anzahl von Lichtstrahlen geteilt wird.

Jedem Lichtstrahl ist ein Lichtempfänger zugeordnet. Als Lichtempfänger können lichtempfindliche Detektoren wie z.B. Photodioden oder CCD-Einheiten dienen. Besonders geeignet sind ortsauflösende CCD-Arrays, mit welchen das Abtasten mit dem Triangulationsprinzip erfolgt. Eine Abtastanordnung und ein Verfahren, welche zur Anpassung in die vorliegende Erfindung besonders geeignet sind, werden in der Anmeldung EP 04 00 5732 beschrieben. Die Offenbarung daraus ist hiermit durch Querverweis in diese Beschreibung eingeschlossen.

Besonders vorteilhaft an der vorliegenden Erfindung ist, dass mehrere Objekte gleichzeitig in der gleichen Anordnung abgetastet werden können. Gleichzeitig bedeutet, dass zumindest zeitweise auf mindestens zwei Objekte zur gleichen Zeit mindestens je ein Lichtstrahl auftrifft. Dadurch kann die gesamte Abtastzeit reduziert werden, wenn mehrere Objekte erfasst werden sollen. Dies ist beispielsweise der Fall, wenn Ohrabdrücke beider Ohren oder zusammengehörige Präzisionsteile aus der Feinmechanik erfasst werden sollen. Ausserdem ist es möglich, die Elemente der Abtastanordnung so anzuordnen, dass diese nicht wesentlich grösser ist als eine herkömmliche Anordnung. Insgesamt gesehen ist eine solche Abtastanordnung pro abzutastendes Objekt günstiger, weil mehrere Elemente der Anordnung beim Abtasten beider Objekte simultan verwendet werden können.

In einer bevorzugten Ausführungsform der Erfindung sind zwei Halterungen für Objekte vorgesehen. Somit können zwei Objekte zur gleichen Zeit abgetastet werden. Die beiden Objekte können beispielsweise die beiden Ohrabdrücke eines Benutzers eines Hörgeräts sein.

Vorteilhaft ist mindestens einer der Halterungen ein Magazin zugeordnet. Das Magazin umfasst Aufnahmestellen zur Aufnahme und Bereitstellung von einer vorbestimmten Anzahl von Objekten. Die Objekte werden automatisiert aus dem Magazin in die zugeordnete Halterung eingesetzt und nach dem Abtasten wieder vom Magazin aufgenommen. Dazu werden vorteilhaft Roboterarme eingesetzt, aber andere Hilfsmittel sind ebenfalls denkbar. Wenn nur wenige Objekte im Magazin bereit gestellt werden, ist auch manuelles Wechseln der Objekte denkbar.

Vorteilhaft sind die Aufnahmestellen des Magazins nummeriert. Die Objekte werden der Halterung dann in einer vorbestimmten Reihenfolge übergeben.

Alternativ oder ergänzend können die Aufnahmestellen des Magazins zur eindeutigen Aufnahme von Objekten kodiert sein. Eine Kodierung kann beispielsweise durch die Form der Aufnahmeöffnungen gegeben sein. Als Kodierung werden sämtliche Hilfsmittel betrachtet, welche eine eindeutige Aufnahme der Objekte in den Aufnahmestellen des Magazins ermöglichen. Eindeutig bedeutet, dass die Position und/oder die Ausrichtung des Objektes in der Aufnahmestelle im Bezug zum Magazin eindeutig zuordenbar ist.

Bei einer besonders geeigneten Form der Kodierung wird das Objekt im Magazin auf einen Träger gesetzt, welcher gemeinsam mit dem Objekt auf die Objekthalterung gebracht wird. Der Träger kann mit einer maschinenlesbaren Kodierung versehen werden, z.B. einem Barcode, einem Elektrochip oder einem RF-Tag. Weiter kann der Träger so gestaltet sein, dass die Position und/oder Ausrichtung des Objekts darauf eindeutig ist. Dadurch ist die Position und/oder Ausrichtung des Objekts bezüglich dem Träger eindeutig bekannt und auch dann nachvollziehbar, wenn das Objekt vom Magazin auf die Halterung gesetzt wird.

In einer bevorzugten Ausführungsform sind die Halterungen passend zur Aufnahme von Gebiss- oder Zahnmodellen gestaltet. Besonders vorteilhaft sind die Aufnahmestellen des Magazins in dieser Ausführungsform zur geordneten bzw. kodierten Aufnahme von Zahnmodellen gefertigt. Das Magazin umfasst dann vorteilhaft 8, 16 oder 32 Aufnahmestellen, so dass die Zähne eines halben, eines ganzen oder beider Kiefer aufgenommen werden können. Wird davon ausgegangen, dass keine Weisheitszähne abgetastet werden müssen, kann auch ein Magazin mit 7, 14 oder 28 Aufnahmestellen geeignet sein.

Die Abtastanordnung umfasst vorteilhaft eine Spiegelanordnung, über welche das Licht von mindestens zwei Lichtquellen auf das entsprechende Objekt gelenkt wird. Das Licht wird dann über mehrere Objekte simultan bewegt. Dadurch können Platz in der Anordnung gespart und die Kosten reduziert werden. Vorteilhaft an einer gemeinsamen Anordnung ist ausserdem, dass die Spiegelanordnung nur einen Antrieb benötigt, wodurch die Kosten weiter gesenkt werden können. Ausserdem können vor allem bei miteinander in Beziehung stehenden Objekten die Fehler aufgrund von Toleranzen verringert werden.

Weiter ist es vorteilhaft, wenn mindestens zwei Halterungen beweglich angeordnet sind. Um Kosten zu sparen, können die beiden Halterungen mit dem gleichen Antrieb angetrieben werden, wobei die Kraftübertragung beispielsweise über Kupplungen oder Riemen geschehen kann.

Das Verfahren zum dreidimensionalen Abtasten von Objekten mit einem gebündeltem Lichtstrahl ist dadurch gekennzeichnet, dass mehrere Objekte zur gleichen Zeit mit der gleichen Abtastanordnung abgetastet werden. Pro Objekt wird mindestens ein Lichtstrahl verwendet. Das Verfahren wird besonders vorteilhaft mit einer Anordnung wie zuvor beschrieben ausgeführt.

In einer bevorzugten Ausführungsform werden zwei Objekte zur gleichen Zeit abgetastet. Dies können beispielsweise die Ohrabdrücke eines Patienten sein.

Bevorzugt werden Gebiss- und/oder Zahnmodelle abgetastet. Andere Anwendungsgebiete sind ebenfalls denkbar. Das Verfahren ist auch zum Abtasten von Ohrabdrücken, mechanischen Präzisionsteilen oder anderen Objekten geeignet.

Vorteilhaft können digitale Darstellungen der zugleich abgetasteten Objekte zu einem Bild zusammengefügt werden. Bei mechanischen Präzisionsteilen, beispielsweise Zahnrädern, kann so das Zusammenspiel zweier Teile analytisch erfasst werden.

In einer weiteren bevorzugten Ausführungsform werden ein Objekt und ein Ausschnitt desselben zugleich abgetastet. Besonders bevorzugt sind das ein Gebissmodell sowie ein oder mehrere Zahnmodelle daraus. Die digitalen Darstellungen des Objekts und des Ausschnitts werden vorteilhaft zu einer wenigstens teilweise überlappenden Darstellung zusammengefügt. Wenn es sich beim Objekt um ein Gebissmodell und beim Ausschnitt um ein oder mehrere Zahnmodelle desselben Gebisses handelt, können die Darstellungen des Zahns oder der Zähne in die Darstellung des Gebisses eingebaut werden. Bei Gebissmodellen besteht allgemein das Problem, dass die Zahnzwischenräume nicht oder nur sehr mangelhaft erfasst werden können. Dieses Problem kann mit einer erfindungsgemässen Anordnung reduziert werden, weil durch das Abtasten einzelner Zähne auch die Zahnzwischenräume erfasst werden. Beispielsweise können Gebissmodelle und einzelne Zahnmodelle aus dem Gebiss zur gleichen Zeit erfasst und zu einem Bild zusammengefügt werden. Auch bei anderen Objekten lässt sich durch separate Abtasten eines Ausschnitts des Objekts die Genauigkeit erhöhen. Besonders vorteilhaft am vorliegenden Verfahren ist, dass sich durch das gleichzeitige Abtasten des Objekts und des Ausschnitts die Messzeit nicht erhöht.

Vorteilhaft ist bei der Verwendung beispielsweise eines Antriebs für mehrere Elemente der Anordnung, dass Fehler aufgrund von Toleranzen reduziert werden.

Besonders vorteilhaft werden die Ausrichtung des Objekts und des Ausschnitts gegeneinander referenziert. Dies wird insbesondere vereinfacht, wenn der Ausschnitt in einem Magazin bereitgestellt wird, bei welchem die Positionierung kodiert ist. Dadurch ist die Ausrichtung des Ausschnitts bereits bekannt und muss nur noch mit dem Objekt selber in Verbindung gebracht werden. Das gegenseitige Referenzieren des Ausschnitts und des Objekts gegeneinander vereinfacht das Zusammenfügen der Darstellungen. Die benötigte Rechenleistung zum Darstellen des Bildes kann reduziert werden, da für das Zusammenfügen bereits eine Anfangsposition der Bilder gegeneinander gegeben ist. Aus dieser Anfangsposition müssen nur noch geringfügige Abweichungen berücksichtigt werden, welche mechanischen Toleranzen entsprechen.

Im folgenden wird die Erfindung anhand von Ausführungsbeispielen und Figuren erläutert. Es zeigen:
- Fig. 1:: Eine schematische Darstellung einer bevorzugten Ausführungsform der erfindungsgemässen Anordnung,
- Fig. 2:: eine schematische Darstellung einer alternativen Ausführungsform der erfindungsgemässen Anordnung,
- Fig. 3:: eine Darstellung eines Magazins für die erfindungsgemässe Anordnung,
- Fig. 4a bis 4e:: Darstellungen von Gebissmodellen in verschiedenen Ansichten,
- Fig. 5a und 5b:: Erläuterungen der Standardkodierung der Zahnmodelle, und
- Fig. 6a und 6b:: eine geeignete Objekthalterung in zwei Stellungen.

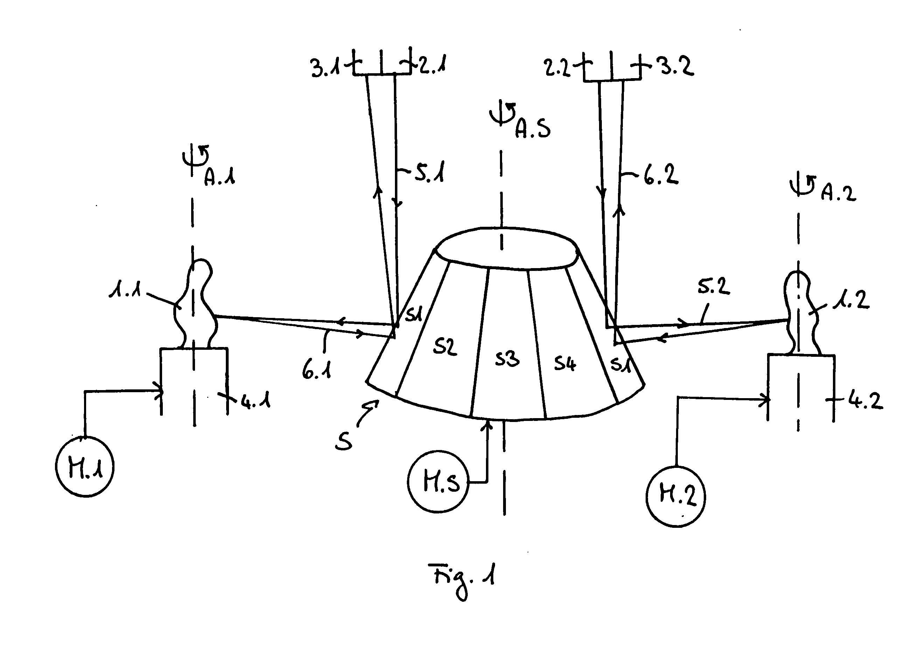

Die bevorzugte Ausführungsform der Abtastanordnung gemäss Fig. 1 ist für das Abtasten von zwei Objekten 1.1 und 1.2 geeignet. Die Objekte 1.1 und 1.2 sind auf je einer Halterung 4.1 und 4.2 befestigt. Die Halterungen 4.1 und 4.2 können um die Achsen A.1 und A.2 rotiert werden. Angetrieben werden die Halterungen 4.1 und 4.2 durch die beiden Motoren M.1 und M.2. Somit kann jede der beiden Halterungen 4.1 und 4.2 unabhängig von der anderen bewegt werden.

Als Lichtquellen dienen die Laserlichtsender 2.1 und 2.2. Jeder Lichtquelle ist ein Detektor 3.1 und 3.2 zugeordnet. Die Detektoren 3.1 und 3.2 sind ortsauflösende Detektorarrays, die zur Triangulation geeignet sind. Damit wird die Distanz der Messpunkte vom Detektor bestimmt. In diesem Beispiel werden Laser-Detektor-Einheiten der Firma Fairchild Semiconductors verwendet.

Die Lichtstrahlen 5.1 und 5.2 werden über eine Spiegelanordnung S von den Lasersendern 2.1 und 2.2 auf die Objekte 1.1 und 1.2 gelenkt. Bei der Spiegelanordnung S sind acht Spiegel S1 bis S4 konusförmig angeordnet. Je zwei Spiegel S1 haben paarweise die gleiche Neigung gegenüber der Achse A.S und sind einander gegenüberliegend auf dem Konus angeordnet. Gleiches gilt für je zwei Spiegel S2, S3 und S4.

Das Laserlicht 5.1 und 5.2 aus den Sendern 2.1 und 2.2 wird jeweils auf zwei gegenüberliegende Spiegel S1 bis S4 gelenkt. Da gegenüberliegende Spiegel die gleiche Neigung aufweisen, werden die Lichtstrahlen 5.1 und 5.2 unter dem gleichen Winkel auf das Objekt 1.1 bzw. 1.2 gelenkt. Dies ist möglich, weil die beiden Objekte 1.1 und 1.2 ungefähr in einer gleichen Ebene angeordnet sind, welche senkrecht steht zur Achse A.S. Die gesamte Abtastanordnung ist also symmetrisch.

Die Lichtstrahlen 5.1 und 5.2 werden an den Objekten 1.1 und 1.2 reflektiert. Die reflektierten Lichtstrahlen 6.1 und 6.2 werden wieder über die Spiegelanordnung in die beiden Detektoren 3.1 und 3.2 gelenkt. Die empfangenen Daten werden zu einer nicht dargestellten Rechenanordnung weitergeleitet, welche Teil der Abtastanordnung ist. Die Daten werden in der Rechenanordnung ausgewertet und können über eine Standardschnittstelle, beispielsweise eine USB-Schnittstelle auf einen handelsüblichen PC übertragen werden.

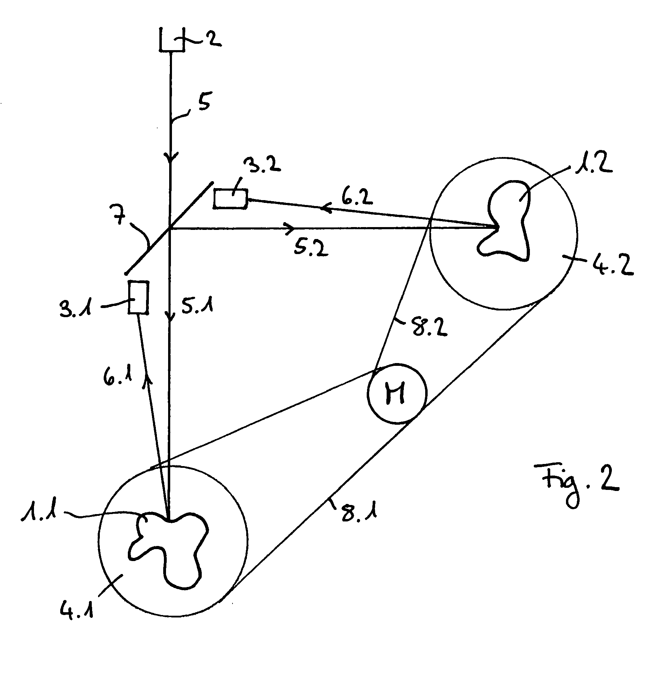

Eine alternative Ausführungsform ist aus Fig. 2 ersichtlich. Die Anordnung ist in Aufsicht dargestellt. Das Licht des Laserlichtsenders 2 wird in einem Strahlteiler 7 geteilt. Somit werden zwei Lichtstrahlen 5.1 und 5.2 zum Abtasten der Objekte 1.1 und 1.2 erzeugt.

Analog zum Beispiel gemäss Fig. 1 können die Halterungen 4.1 und 4.2 um je eine vertikale Achse (senkrecht zur Bildebene) rotiert werden. Ausserdem sind die Halterungen entlang diesen Achsen in der Höhe verstellbar. Die Höhenverstellung erfolgt über ein Gewinde. Deshalb wird kein separater Motor zur Höhenverstellung benötigt. Die Halterungen 4.1 und 4.2 werden über den gemeinsamen Motor M angetrieben, die Kraftübertragung erfolgt über die Riemen 8.1 und 8.2.

Aufgenommen werden die reflektierten Lichtstrahlen 6.1 und 6.2 in den beiden Detektoren 3.1 und 3.2. Die Detektoren können auch so angeordnet sein, dass das reflektierte Licht 6.1 und 6.2 durch den Strahlteiler geführt wird. Dies ist jedoch weniger vorteilhaft, weil dann Interferenzerscheinungen auftreten können.

Bei allen Ausführungsbeispielen werden die gesammelten Daten an eine Rechenanordnung (nicht dargestellt) weitergeleitet. Diese Rechenanordnung kann entweder ein festes Bestandteil der Abtastanordnung sein oder nach Bedarf mit der Anordnung verbunden werden.

Besonders vorteilhaft kann eine Anordnung nach Fig. 1 oder 2 zum Abtasten von Gebissmodellen verwendet werden. Bei Gebissmodellen besteht allgemein das Problem, dass die Zahnzwischenräume nicht oder nur sehr mangelhaft erfasst werden können. Mit einer Anordnung gemäss der vorliegenden Erfindung können Gebissmodelle und einzelne Zahnmodelle aus dem Gebiss zur gleichen Zeit erfasst und zu einem Bild zusammengefügt werden.

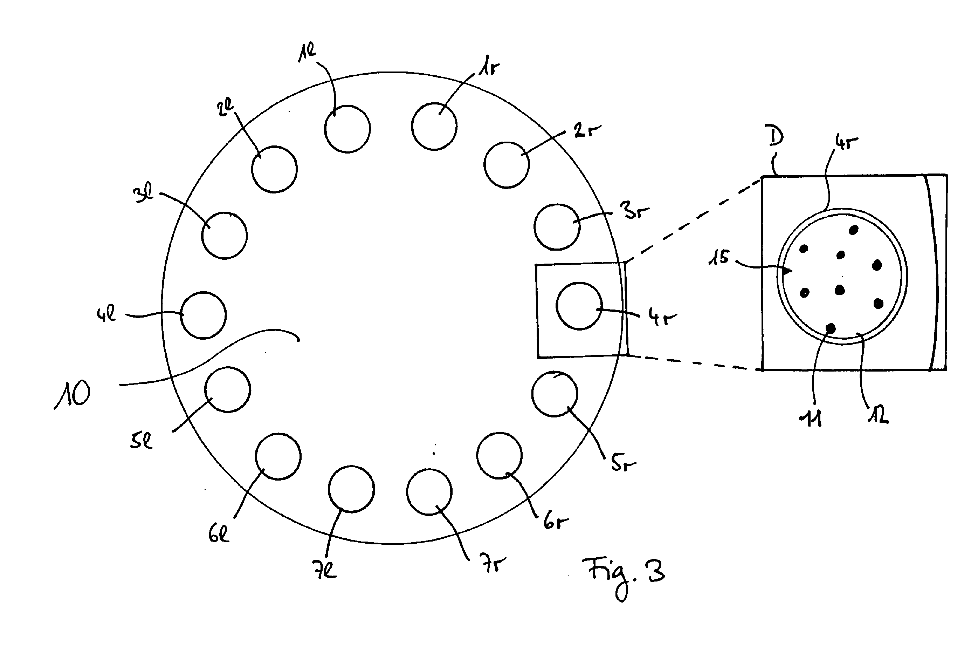

Zum Abtasten von einzelnen Zahnmodellen wird vorteilhaft ein Magazin 10 wie in Fig. 3 dargestellt verwendet. Ein Magazin 10 hat 14 Aufnahmestellen 11 bis 71 und 1r bis 7r. Die Aufnahmestellen 11 bis 7l und 1r bis 7r sind nummeriert, wobei jede Zahl einem festgelegten Zahn entspricht. 11 ist der vordere Schneidezahn links, 1r der vordere Schneidezahn rechts. Die Nummerierung geht bis 71 und 7r, was dem hintersten Backenzahn links und rechts entspricht. Die Weisheitszähne werden in diesem Beispiel nicht berücksichtigt. Selbstverständlich wäre es möglich, auch ein Magazin 10 mit 16 Plätzen zur Verfügung zu stellen.

Auf einem Magazin 10 gemäss Fig. 3 finden also die Zähne eines Kiefers Platz. Jedem Zahn ist eine eindeutige Position im Magazin 10 zugeordnet. Wenn nicht alle Zähne eines Kiefers einzeln abgetastet werden sollen, muss darauf geachtet werden, dass die Zähne in die richtige Aufnahmestelle gesetzt werden.

Zusätzlich zur Nummerierung sind die Aufnahmestellen 11 bis 7l und 1r bis 7r auch kodiert. Dies bedeutet, dass die Zahnmodelle nur in einer eindeutigen Ausrichtung in die Aufnahmestellen 11 bis 7l und 1r bis 7r gesetzt werden können. Dadurch ist durch das Magazin 10 genau bekannt, welcher Zahn sich in welcher Ausrichtung in welcher der Aufnahmestellen 11 bis 7l und 1r bis 7r befindet. Die Kodierung 11 ist in einem Ausschnitt D in Fig. 3 vergrössert dargestellt. In diesem Beispiel besteht die Kodierung darin, dass in den Aufnahmestellen 11 bis 7l und 1r bis 7r Trägerelemente 12 mit Kodierungsstiften 11 angebracht sind, auf welche sich das Zahnmodell eindeutig setzen lässt. Es ist nicht möglich, das Zahnmodell in einer anderen Ausrichtung auf die Trägerelemente 12 aufzusetzen, als dies durch die mittels der Kodierungsstifte 11 definierte Kodierung erlaubt wird.

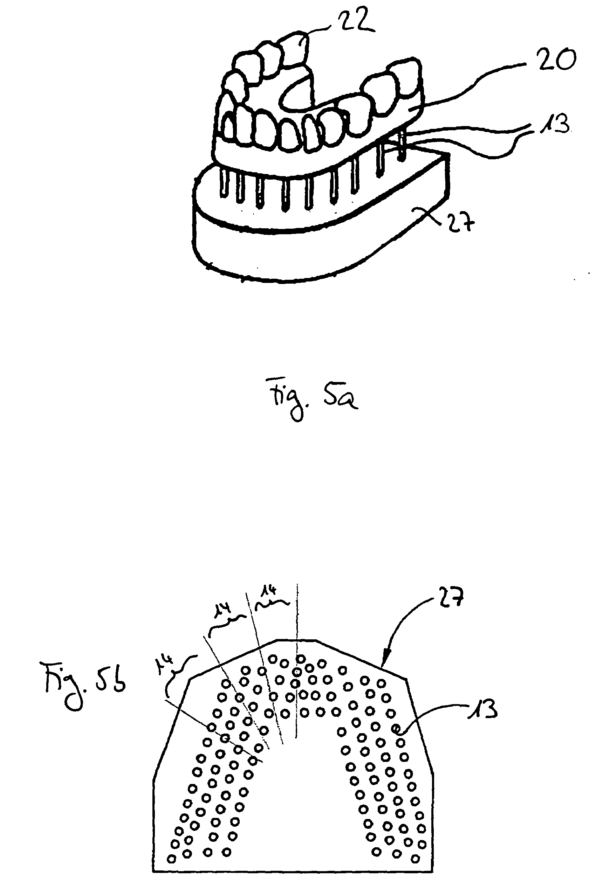

Die Kodierstifte 11 entsprechen der Standardkodierung, die vom Zahntechniker beim Fertigen des Modells verwendet wird. Diese Standardkodierung ist aus den Fig. 5a und 5b ersichtlich. Der Zahntechniker setzt das Gebissmodell 20 auf je eine Unterlage 27, wobei die Unterlage 27 Positionierstifte 13 enthält. Das Modell 20 lässt sich nur in einer Position auf diese Positionierstifte stellen. Das gleiche gilt, wenn das Modell 20 zu einzelnen Zahnmodellen 22 zersägt wird. Jedes Modell 22 kann auf eindeutige Weise auf die Stifte 12 gesetzt werden. Die Anordnung der Kodierstifte 11 (Fig. 3) entspricht der Anordnung der Positionierstifte 13. Auf jedes Trägerelement 12 (Fig. 3) wird ein Abschnitt 14 der Unterlage 27 abgebildet. Die Trägerelemente 12 (Fig. 3) werden mitsamt dem jeweiligen Zahnmodell 22 in die Halterung 4.2 eingesetzt. Jedes Trägerelement 12 aus Fig. 3 ist zur zusätzlichen Absicherung mit einem Elektrochip (nicht sichtbar) kodiert, wobei der Elektrochip die Information über die Nummer 11 bis 71 bzw. 1r bis 7r der Aufnahmestelle und die Ausrichtung der Kodierstifte 11 enthält. Ausserdem gibt eine Positionsmarkierung 15 Auskunft über die Ausrichtung des Trägers 12. Dadurch wird sichergestellt, dass die Zahnmodelle 22 (Fig. 5a) in einer eindeutigen Position abgetastet werden. Das gleiche Vorgehen wird zum Kodieren des Modells 21 und der Zahnmodelle 23 des Unterkiefers angewandt.

Wenn die Ausrichtung der einzelnen Zahnmodelle 22, 23 sehr genau ist, kann sogar auf das Abtasten des gesamten Gebissmodells 20, 21 verzichtet werden. Hohe Genauigkeit in der Ausrichtung erreicht man beispielsweise, indem die Kodierstifte 11 eine konische Form aufweisen, dadurch verringert sich das mechanische Spiel. Das Abtasten des gesamten Gebissmodells 20, 21 kann grundsätzlich weniger genau durchgeführt werden, als das Abtasten eines einzelnen Zahnmodells 22, 23, weil kleinere Objekte mit grösserer Genauigkeit erfasst werden können. Ausserdem kann die Abtastgeschwindigkeit weiter erhöht werden, wenn beide Halterungen 4.1 und 4.2 durch ein Magazin 10 mit Zahnmodellen 22, 23 gespeist werden.

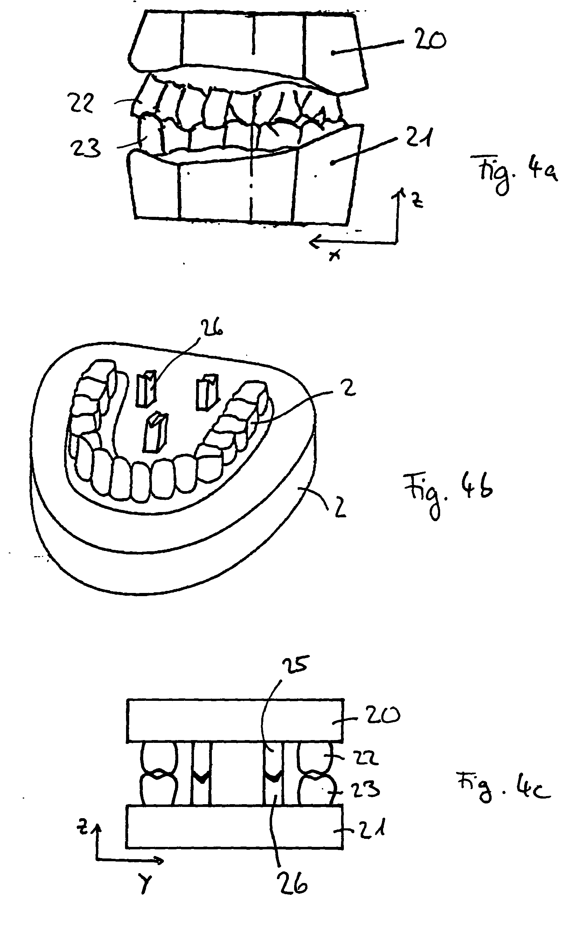

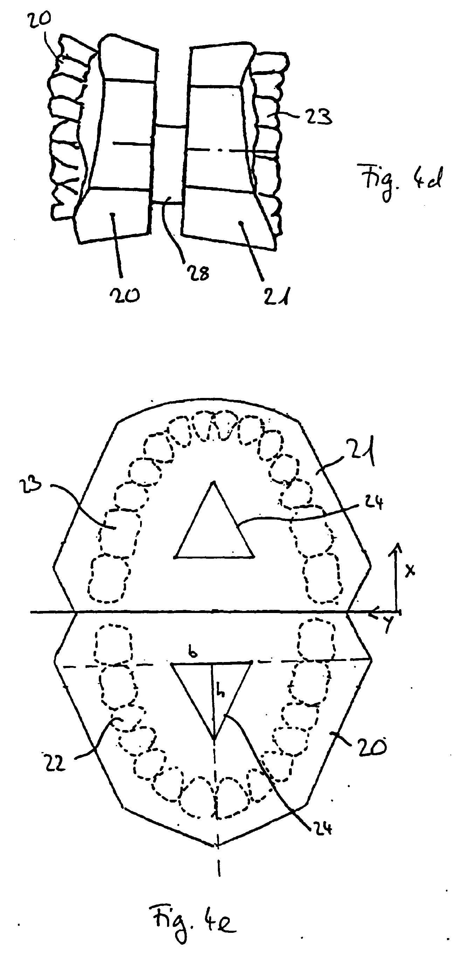

In den Figuren 4a bis 4e sind Gebissmodelle in verschiedenen Ansichten dargestellt. Zum Abtasten wird in die Halterung 4.1 das Gebissmodell eines Kiefers 20 oder 21 gespannt, während die andere Halterung 4.2 durch das Magazin 10 gespeist wird. Das Entnehmen eines Objekts 1.2 aus dem Magazin 10 sowie das Einsetzen des Objekts 1.2 in die Halterung 4.2 wird mit einem herkömmlichen Roboterarm (nicht dargestellt) ausgeführt. Derselbe Roboterarm nimmt nach vollendeter Messung das Objekt 1.2 aus der Halterung 4.2 und setzt es wieder in das Magazin 10 ein. In der Halterung 4.2 wird also hintereinander ein Zahn 22, 23 nach dem anderen abgetastet.

Es ist möglich, die Modelle des Oberkiefers 20 und des Unterkiefers 21 in einem Abtastvorgang zu erfassen, indem die beiden Modelle 20 und 21 Rücken an Rücken aneinander befestigt werden (siehe Fig. 4d). Das Abtasten des gesamten Gebissmodells 20, 21 dauert wesentlich länger als das Abtasten eines einzelnen Zahns 22, 23. Deshalb wird durch das gleichzeitige Abtasten von Zähnen viel Zeit gespart, da einige Zähne 22, 23 fertig abgetastet werden können, bis das Gebissmodell abgetastet ist. Voraussetzung dafür ist, dass wie in Fig. 1 dargestellt, beide Halterungen 4.1 und 4.2 unabhängig voneinander bewegt werden können.

Da die Position und Ausrichtung der einzelnen Zähne bekannt ist, muss nur das Gebissmodell an sich auch kodiert werden. Dadurch wird das rechnerische Zusammenfügen der Darstellungen der Zähne und der Darstellung des Gebisses wesentlich vereinfacht. Aus den bekannten Daten kann die Darstellung eines Zahns ungefähr richtig in die Darstellung des Gebisses eingefügt werden. Es ist nur noch eine Fehlerkorrektur notwendig, um die Darstellung des Zahns genau in die Darstellung des Gebisses einzufügen. Die Fehlerkorrektur erfolgt mit dem Fachmann bekannten Methoden, als Beispiel sei die Methode der kleinsten Fehlerquadrate genannt.

Zur Ausrichtung des Gebissmodells kann dieses direkt markiert werden. Besonders geeignet ist es, wenn die Modelle von Oberkiefer 20 und Unterkiefer 21 Rücken an Rücken aneinander befestigt werden. Vorangehend erfolgt eine Positionierung der Modelle durch den Zahntechniker. In allen drei Raumdimensionen werden die Modelle gleich wie im Kiefer orientiert, was der Zahntechniker mit den üblichen ihm zur Verfügung stehenden Hilfsmitteln macht. Die ausgerichteten Kiefermodelle 20 und 21 passen wie in Fig. 4a dargestellt aufeinander.

Die vom Zahntechniker ausgerichteten Modelle 20 und 21 werden anschliessend markiert. Zur Positionierung in der x-y-Ebene (Beissebene) werden die Modelle beider Kiefer 20 und 21 mit einem exakt überschneidenden gleichseitigen Dreieck 24 markiert. Selbstverständlich könnte jede andere Form als ein Dreieck 24 zur Markierung verwendet werden. Das Markierungsdreieck 24 dient zugleich zur Erkennung der Ausrichtung des Gebisses. Beispielsweise kann das Dreieck auf einem der beiden Kiefer 20 oder 21, beispielsweise dem Oberkiefer 20, immer so positioniert werden, dass die Basislinie b des Dreiecks verlängert durch den Zwischenraum zwischen dem 6. und dem 7. Zahn geht und die Höhe h verlängert durch den Zwischenraum zwischen den vordersten beiden Schneidezähne führt. Wenn die Markierung mit abgetastet wird, kann daran die Referenzierung für das Einfügen der Darstellungen der Zahnmodelle vorgenommen werden.

Es ist auch möglich, dass die Markierung 24 nur verwendet wird, um die Modelle des Oberkiefers 20 und des Unterkiefers 21 exakt Rücken an Rücken zu positionieren. Nach dem Abtasten müssen beide Modelle 20 und 21 rechnerisch um 180° gedreht werden, dann stimmt die Ausrichtung der Modelle in x-y-Richtung. Die Positionierung Rücken an Rücken ist in Fig. 4d dargestellt. Die beiden Kiefermodelle 20 und 21 werden mittels der Verbindung 28 in der gegeneinander ausgerichteten Position gehalten.

Zur Festlegung des Abstandes der beiden Kiefer 20 und 21, was der Ausrichtung entlang der z-Achse entspricht, werden Abstandhalter 25 und 26 in die Modelle des Oberkiefers 20 und des Unterkiefers 21 eingebaut. Besonders vorteilhaft sind erfahrungsgemäss keil- und nutförmige Abstandhalter 25 und 26, die ineinander passen. Dies ist in den Fig. 4b und 4c dargestellt. Die Öffnung des Keils 25 bzw. der Nut 26 kann zusätzlich die Information enthalten, in welche Richtung der Kiefer bei einer Kaubewegung bewegt wird.

Da die Abstandhalter ebenfalls mit abgetastet werden, können die Darstellungen des Oberkiefers 20 und des Unterkiefers 21 anschliessend zu einem gemeinsamen Bild zusammengefügt werden. Mit einer geeigneten Software kann dann die Kaubewegung simuliert werden. Falls Stiftzähne, Kronen oder Brücken benötigt werden, können diese ebenfalls mit einer geeigneten Software simuliert und gemäss der Berechnung gefertigt werden. Die Abstandhalter 25 und 26 können zusätzlich anstatt der Markierung 24 zur Referenzierung der Modelle dienen.

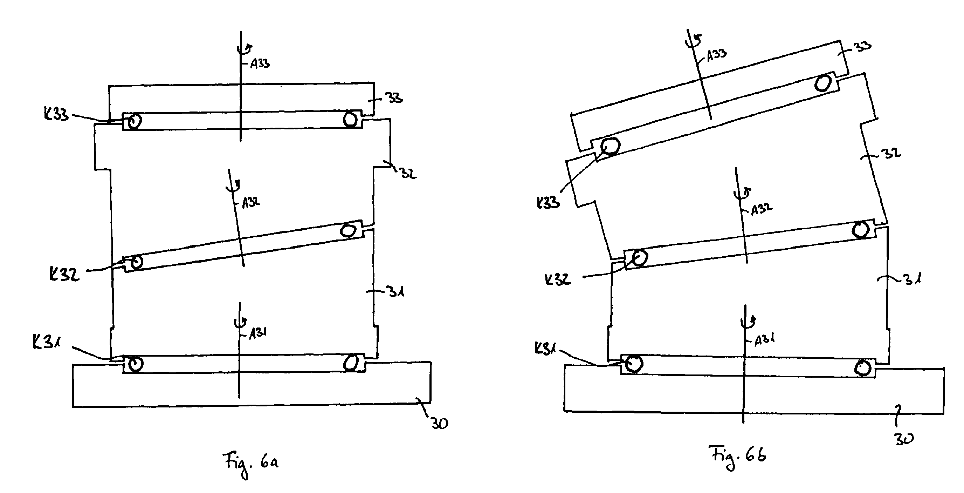

In den Fig. 6a und 6b ist eine Objekthalterung 4 dargestellt, die zur Aufnahme von Gebiss- oder Zahnmodellen 20 bis 23 geeignet ist. Insbesondere, wenn die Modelle 20 und 21 des Ober- und Unterkiefers wie in Fig. 4d dargestellt gemeinsam abgetastet werden sollen, ist eine solche Halterung 4 geeignet, da sie robust genug ist, das Gewicht des gesamten Modells zu tragen. Vorzugsweise besteht die Halterung 4 aus Aluminium, da dieses leicht ist. Denkbar sind aber auch andere widerstandsfähige Materialien wie z.B. Stahl oder verstärkter Kunststoff.

Die Halterung 4 besteht aus drei Zylinderabschnitten 31, 32 und 33, welche sich auf einer Grundplatte 30 befinden. Der Zylinderabschnitt 31 ist gegenüber der Grundplatte um die Achse A31 drehbar. Wenn der Abschnitt 31 gedreht wird, werden die oberen beiden Abschnitte 32 und 33 mitgedreht. Der Abschnitt 32 ist gegenüber dem Abschnitt 31 um die Achse A32 drehbar. Die Achse A32 präzidiert um die Achse A31, wenn der Abschnitt 31 um die Achse A31 gedreht wird. Bei einer Rotation des Abschnitts 32 um die Achse A32 steht der Zylinderabschnitt 31 still, der Abschnitt 33 hingegen wird mitgedreht. Der Zylinderabschnitt 33 wiederum ist um die Achse A33 gegenüber dem Abschnitt 32 drehbar. Die Achse A33 präzidiert um die Achse A32, wenn der Abschnitt 32 um die Achse A32 rotiert wird. Bei einer Rotation von Abschnitt 33 um die Achse A33 werden die unteren beiden Abschnitte 31 und 32 nicht mitgedreht. Zwischen den Elementen 30, 31, 32 und 33 befinden sich Kugellager K31, K32 und K33, welche die jeweilige Rotation erleichtern. Dem Fachmann sind unterschiedliche Antriebe bekannt, mit welchen sich die Zylinderabschnitte rotiert werden können.

Die Achse A32 ist gegenüber der Achse A31 um einen Winkel von ca. 8° verkippt. Dadurch kann ein Objekt 1.1, welches auf dem Zylinderabschnitt 33 befestigt wird, gegenüber der Hauptdrehachse um bis zu 16° gekippt werden. Die Ausrichtung des Objekts 1.1 nach dem Kippen wird durch eine Rotation des Abschnitts 33 um die Achse A33 bestimmt. Mit dieser Halterung 4 kann das Objekt also um die Achse A31 rotiert werden, wobei verschiedene Kippstellungen des Objekts 1.1 gewählt werden. Dadurch kann das Objekt 1.1 in unterschiedlichen Ansichten abgetastet werden. Die Auswirkungen des Verkippens sind in der Anmeldung EP 04 00 5732 detailliert beschrieben.

## Patentansprüche

1. Abtastanordnung zum Abtasten von Objekten (1.1, 1.2) mit einem gebündelten Lichtstrahl (5, 5.1, 5.2), wobei der Lichtstrahl (5, 5.1, 5.2) relativ zur Oberfläche des Objekts (1.1, 1.2) bewegbar ist, **dadurch gekennzeichnet, dass** die Anordnung wenigstens zwei Objekthalterungen (4.1, 4.2) und Mittel zum Erzeugen von wenigstens einem Lichtstrahl (2, 2.1, 2.2, 7) pro Objekt (1.1, 1.2) sowie jeweils einem Lichtstrahl (6.1, 6.2) zugeordnete Lichtempfänger (3.1, 3.2) zum gleichzeitigen Abtasten von wenigstens zwei Objekten (1.1, 1.2) aufweist.

2. Abtastanordnung nach Anspruch 1, **dadurch gekennzeichnet, dass** zwei Objekthalterungen (4.1, 4.2) vorgesehen sind.

3. Abtastanordnung nach einem der Ansprüche 1 oder 2, **dadurch gekennzeichnet, dass** mindestens einer der Halterungen (4.1, 4.2) ein Magazin (10) mit Aufnahmestellen (11-71, 1r-7r) zur Aufnahme und Bereitstellung einer vorbestimmten Anzahl von Objekten (1.1, 1.2) zugeordnet ist.

4. Abtastanordnung nach Anspruch 3, **dadurch gekennzeichnet, dass** die Aufnahmestellen (11-71, 1r-7r) des Magazins (10) nummeriert sind.

5. Abtastanordnung nach einem der Ansprüche 3 oder 4, **dadurch gekennzeichnet, dass** die Aufnahmestellen (11-71, 1r-7r) des Magazins (10) zur eindeutigen Aufnahme von Objekten (1.1, 1.2) kodiert sind.

6. Abtastanordnung nach einem der Ansprüche 1 bis 5, **dadurch gekennzeichnet, dass** die Halterungen (4.1, 4.2) zur Aufnahme von Gebiss- (20, 21) und/oder Zahnmodellen (22, 23) ausgebildet sind.

7. Abtastanordnung nach einem der Ansprüche 3 bis 5, **dadurch gekennzeichnet, dass** die Aufnahmestellen (11-71, 1r-7r) des Magazins (10) zur geordneten und/oder kodierten Aufnahme von Zahnmodellen (22, 23) ausgebildet sind.

8. Abtastanordnung nach einem der vorangehenden Ansprüche, **dadurch gekennzeichnet, dass** eine Spiegelanordnung (S) vorgesehen ist, über welche die Lichtstrahlen (5, 5.1, 5.2) von mindestens zwei mindestens zwei Lichtquellen (2, 2.1, 2.2, 7) auf das entsprechende Objekt (1.1, 1.2) gelenkt wird.

9. Abtastanordnung nach einem der vorangehenden Ansprüche, **dadurch gekennzeichnet, dass** mindestens zwei Halterungen (4.1, 4.2) beweglich angeordnet sind.

10. Abtastanordnung nach Anspruch 9, **dadurch gekennzeichnet, dass** ein gemeinsamer Antrieb (M) zur Bewegung von mindestens zwei Halterungen (4.1, 4.2) vorgesehen ist.

11. Verfahren zum Abtasten von Objekten (1.1, 1.2) mit einem gebündeltem Lichtstrahl (5, 5.1, 5.2), insbesondere in einer Anordnung gemäss einem der Ansprüche 1 bis 10, **dadurch gekennzeichnet, dass** mindestens zwei Objekte (1.1, 1.2) zur gleichen Zeit mit der gleichen Abtastanordnung abgetastet werden, wobei zum Abtasten pro Objekt (1.1, 1.2) mindestens ein Lichtstrahl (5, 5.1, 5.2) verwendet wird.

12. Verfahren nach Anspruch 11, **dadurch gekennzeichnet, dass** zwei Objekte (1.1, 1.2) zur gleichen Zeit abgetastet werden.

13. Verfahren nach Anspruch 11 oder 13, **dadurch gekennzeichnet, dass** Gebiss- (20, 21) und/oder Zahnmodelle (22, 23) abgetastet werden.

14. Verfahren nach einem der Ansprüche 11 bis 13, **dadurch gekennzeichnet, dass** digitale Darstellungen der zugleich abgetasteten Objekte (1.1, 1.2) zu einem Bild zusammengefügt werden.

15. Verfahren nach einem der Ansprüche 11 bis 14, **dadurch gekennzeichnet, dass** ein Objekt (1.1, 1.2) und ein Ausschnitt desselben, vorzugsweise ein Gebissmodell (20, 21) sowie ein oder mehrere Zahnmodelle (22, 23) daraus zugleich abgetastet werden.

16. Verfahren nach Anspruch 15, **dadurch gekennzeichnet, dass** die digitalen Darstellungen des Objekts (1.1, 1.2) und des Ausschnitts zu einer wenigstens teilweise überlappenden Darstellung zusammengefügt werden.

17. Verfahren nach Anspruch 15 und 16, **dadurch gekennzeichnet, dass** die Ausrichtung des Objekts (1.1, 1.2) und des Ausschnitts gegeneinander referenziert wird.

18. Verfahren nach einem der Ansprüche 11 bis 17, **dadurch gekennzeichnet, dass** die Lichtstrahlen (5, 5.1, 5.2) von mindestens zwei Lichtquellen (2, 2.1, 2.2, 7) über eine gemeinsame Spiegelanordnung (S) zum Objekt (1.1, 1.2) gelenkt werden.
